# EUROPEAN PATENT APPLICATION

(11) **EP 3 597 527 A1**
(43) Date of publication of application: **22.01.2020**
(21) Application number: 19186126.9
(22) Date of filing: 12.07.2019
(51) Int. Cl.: B64C 1/10, B64C 1/00

(54) **PRESSURE BULKHEAD AND METHOD OF INSTALLATION**

(30) Priority: 20.07.2018 US 201862700991 P
(71) Applicant: Bombardier Inc., Dorval, Québec H4S 1Y9 (CA)
(72) Inventor: MORIN, William, Montreal, Québec H1N 0B8 (CA); MAROUZE, Jean-Philippe, Montreal, Québec H3W 2M1 (CA); RACINE, Simon, Montreal, Québec H2G 2C5 (CA)
(74) Representative: Holmes, Matthew William

(57) **Abstract**

A pressure bulkhead (12) of an aircraft (10) and an associated method of installation are disclosed. The pressure bulkhead (12) comprises an upper bulkhead portion (12U) sealingly separating a first pressurized compartment (22A) disposed above a floor (30) of the aircraft (10) from an unpressurized zone (24) of the aircraft, and a lower bulkhead portion (12L) sealingly separating a second pressurized compartment (22B) disposed below the floor (30) of the aircraft (10) from the unpressurized zone (24) of the aircraft (10). The method of installation can comprise installing the lower bulkhead portion (12L) before the upper bulkhead portion (12U) in order to facilitate the installation of other components.

## Description

### TECHNICAL FIELD

The present disclosure relates generally to aircraft, and more particularly to pressure bulkheads for aircraft. This application claims priority from US Provisional Patent Application No. 62/700,991 filed 20th July 2018, the entire contents of which are expressly incorporated by reference herein.

### BACKGROUND

A rear pressure bulkhead is commonly used in the tail portion of an aircraft fuselage in order to provide a seal between the pressurized passenger cabin of the aircraft and a tail portion of the aircraft which is essentially at an ambient pressure that can vary based on the altitude of the aircraft. The pressure bulkhead typically has an outer round form that generally conforms to the inner wall of the fuselage. On some aircraft, a rear pressure bulkhead of a traditional metallic construction can be relatively heavy and can cause challenges with weight and balance management. Also, since there can be several system (e.g., electric, hydraulic, pneumatic) penetrations through the rear pressure bulkhead, the installation of traditional rear pressure bulkheads can be time consuming and labour intensive. Improvement is desirable.

### SUMMARY

In one aspect, the disclosure describes a pressure bulkhead for an aircraft. The pressure bulkhead may comprise an upper bulkhead portion sealingly separating a first pressurized compartment disposed above a floor of the aircraft from an unpressurized zone of the aircraft. The pressure bulkhead may comprise a lower bulkhead portion sealingly separating a second pressurized compartment disposed below the floor of the aircraft from the unpressurized zone of the aircraft. The upper bulkhead portion may be made primarily of a fibre-reinforced composite material. The lower bulkhead portion may be made primarily of a metallic material.

The upper bulkhead portion may be generally non-planar.

The upper bulkhead portion may be dome-shaped.

The lower bulkhead portion may be generally planar.

The upper bulkhead portion may span a larger area than the lower bulkhead portion.

A weight of the upper bulkhead portion may be between 20% and 40% of a combined weight of the upper bulkhead portion and the lower bulkhead portion.

A weight of the upper bulkhead portion may be between 25% and 35% of a combined weight of the upper bulkhead portion and the lower bulkhead portion.

A weight of the upper bulkhead portion may be about 30% of a combined weight of the upper bulkhead portion and the lower bulkhead portion.

Embodiments can include combinations of the above features.

In another aspect, the disclosure describes a pressure bulkhead for an aircraft. The pressure bulkhead may comprise an upper bulkhead portion sealingly separating a first pressurized compartment disposed above a floor of the aircraft from an unpressurized zone of the aircraft, the upper bulkhead portion being generally non-planar. The pressure bulkhead may comprise a lower bulkhead portion sealingly separating a second pressurized compartment disposed below the floor of the aircraft from the unpressurised zone of the aircraft, the lower bulkhead portion being generally planar.

The upper bulkhead portion may be dome-shaped.

The upper bulkhead portion may span a larger area than the lower bulkhead portion.

The upper bulkhead portion may comprise a fibre-reinforced composite material and the lower bulkhead portion may comprise a metallic material.

A weight of the fibre-reinforced composite material may be between 20% and 40% of a combined weight of the upper bulkhead portion and the lower bulkhead portion.

A weight of the fibre-reinforced composite material may be between 25% and 35% of a combined weight of the upper bulkhead portion and the lower bulkhead portion.

A weight of the fibre-reinforced composite material may be about 30% of a combined weight of the upper bulkhead portion and the lower bulkhead portion.

Embodiments can include combinations of the above features.

In another aspect, the disclosure describes an aircraft comprising a pressure bulkhead as described herein.

In another aspect, the disclosure describes a method for installing a rear pressure bulkhead in an aircraft. The method may comprises installing a lower bulkhead portion in the aircraft, the lower bulkhead portion being configured to separate a pressurized compartment disposed below a floor of the aircraft from an unpressurized zone of the aircraft during operation of the aircraft. The method may comprise, after installing the lower bulkhead portion, installing an upper bulkhead portion in the aircraft, the upper bulkhead portion being configured to separate a pressurized compartment disposed above the floor of the aircraft from the unpressurized zone of the aircraft during operation of the aircraft.

The method may comprise installing one or more components in the unpressurized zone of the aircraft after installing the lower bulkhead portion and before installing the upper bulkhead portion.

The method may comprise establishing one or more system penetrations through the lower bulkhead portion after installing the lower bulkhead portion and before installing the upper bulkhead portion.

The method may comprise establishing one or more electrical connections through the lower bulkhead portion after installing the lower bulkhead portion and before installing the upper bulkhead portion.

The method may comprise establishing one or more fluid connections through the lower bulkhead portion after installing the lower bulkhead portion and before installing the upper bulkhead portion.

The method may comprise forming one or more system penetration holes through the upper bulkhead portion before installing the upper bulkhead portion.

The method may comprise establishing one or more system penetrations through the upper bulkhead portion after installing the upper bulkhead portion.

The method may comprise installing one or more components in the compartment disposed below the floor of the aircraft after installing the lower bulkhead portion and before installing the upper bulkhead portion.

In some embodiments, the lower bulkhead portion is generally planar and the upper bulkhead portion is generally non-planar.

In some embodiments, the upper bulkhead portion is made primarily of a fibre-reinforced composite material and the lower bulkhead portion is made primarily of a metallic material.

In some embodiments, the upper bulkhead portion spans a larger area than the lower bulkhead portion.

Embodiments can include combinations of the above features.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### DESCRIPTION OF THE DRAWINGS

Embodiments of the present disclosure will be now be described, by way of example only, with reference to the accompanying drawings, in which:
FIG. 1 is a top plan view of an example aircraft comprising a pressure bulkhead;
FIG. 2 is a perspective view of an example pressure bulkhead installed inside a fuselage of the aircraft of FIG. 1;
FIG. 3 is an elevation view of the pressure bulkhead of FIG. 2 viewed along a longitudinal axis of a fuselage of the aircraft from a position aft of the pressure bulkhead;
FIG. 4 is a schematic side profile of the pressure bulkhead of FIG. 2;
FIG. 5 is a schematic side view of an example structural connection between an upper portion of the pressure bulkhead and a fuselage of the aircraft;
FIG. 6 is a schematic side view of an example structural connection between the upper portion of the pressure bulkhead and a lower portion of the pressure bulkhead;
FIG. 7 is flowchart of a method for installing a pressure bulkhead in an aircraft; and
FIG. 8 is an enlarged perspective view of part of the lower portion of the pressure bulkhead with conduits extending therethrough.

### DETAILED DESCRIPTION

The following disclosure relates to a pressure bulkhead configuration for sealingly separating a pressurized zone of an aircraft from an unpressurized zone of the aircraft. In some embodiments, the pressure bulkhead can comprise an upper bulkhead portion sealingly separating a first pressurized compartment disposed above a floor of the aircraft from the unpressurized zone of the aircraft, and a lower bulkhead portion sealingly separating a second pressurized compartment disposed below the floor of the aircraft from the unpressurized zone of the aircraft. In some embodiments, the upper bulkhead portion can be made from a fibre-reinforced composite material and the lower bulkhead portion can be made from a metallic material. In some embodiments, the overall weight of the pressure bulkhead can be lower than a comparable single-piece pressure bulkhead that is made substantially entirely of a metallic material.

The separate upper and lower bulkhead portions can be installed separately and at different times in the aircraft during assembly of the aircraft. For example, the lower bulkhead portion can be installed first and other installation steps can be carried out in the aircraft while the upper bulkhead portion has not yet been installed. The absence of the upper bulkhead portion during the other installation steps can provide increased access for additional personnel to participate in the other installations steps. This can facilitate installation and reduce installation time especially in situations where the pressure bulkhead is a rear pressure bulkhead and the space aft of the pressure bulkhead (e.g., in a tail portion of a smaller aircraft) is relatively small but still contains several components of different systems in the aircraft.

In some embodiments, the upper bulkhead portion can be generally non-planar and the lower bulkhead portion can be generally planar. The generally planar lower bulkhead portion can also facilitate the installation of systems in the aircraft and also facilitate the installation of system penetrations through the lower bulkhead portion.

In various embodiments, other advantages can be associated with the pressure bulkhead disclosed herein. For example, the (e.g., entire) composite upper bulkhead portion can be located above a floor of aircraft where the risk of galvanic corrosion associated with the upper bulkhead portion can be reduced. The metallic lower bulkhead portion can facilitate electrical grounding of systems and provide flexibility in positioning of system penetrations therethrough. In some embodiments, the pressure bulkhead disclosed herein can promote reduced production and assembly costs compared to those associated with existing pressure bulkheads. Also, the use of a non-planar (e.g., dome-shaped) upper bulkhead portion above the floor only can allow for a shallower dome-shaped upper bulkhead portion compared to another larger dome-shaped composite bulkhead that would span the area both above and below the floor of the aircraft.

Aspects of various embodiments are described through reference to the drawings.

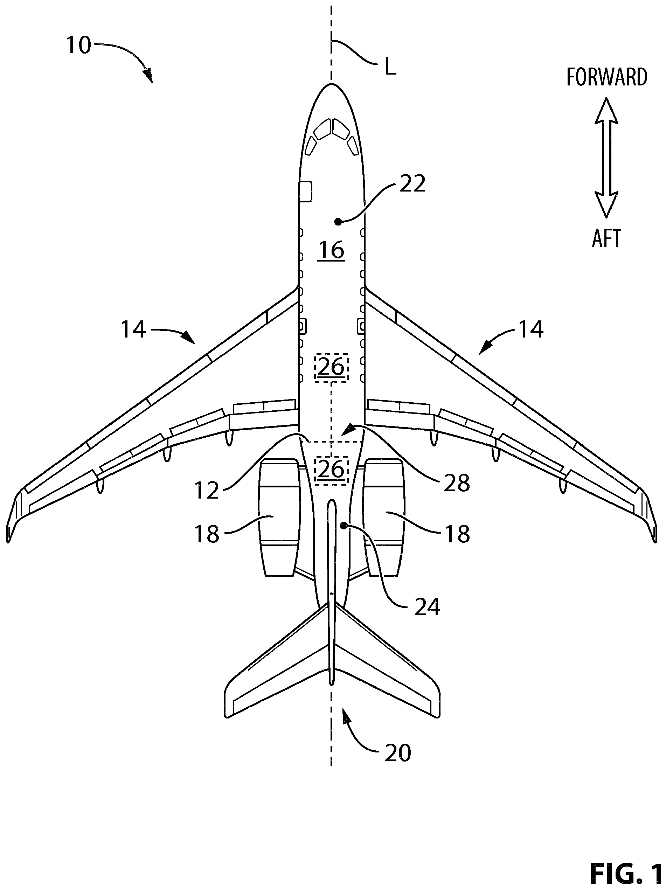

FIG. 1 is a top plan view of an example aircraft 10, which comprises pressure bulkhead 12 as described herein. Aircraft 10 can be any type of aircraft such as corporate (e.g., business jet), private, commercial and passenger aircraft suitable for civil aviation. For example, aircraft 10 can be a narrow-body, twin-engine jet airliner or can be an ultra-long range business jet. Aircraft 10 can be a fixed-wing aircraft. Aircraft 10 can comprise wings 14, fuselage 16, one or more engines 18 and empennage 20.

Pressure bulkhead 12 can be a rear pressure bulkhead which can also be called an aft pressure bulkhead. Aircraft 10 can comprise pressurized zone 22 that is disposed inside fuselage 16 and forward of pressure bulkhead 12, and unpressurized zone 24 disposed inside of fuselage 16 and aft of pressure bulkhead 12. Pressurized zone 22 can comprise a passenger cabin, a cargo area and/or a cockpit of aircraft 10 for example. Aircraft 10 can comprise a suitable pressurization system (not shown) configured to maintain a desired pressure inside pressurized zone 22 during flight of aircraft 10 in order to maintain a safe and comfortable environment for passengers and crew when flying at higher altitudes. Unpressurized zone 24 can be disposed in a tail/aft portion of aircraft 10 and can comprise one or more components 26 of one or more systems of aircraft 10. For example, in various embodiments, components 26 can include or be part of one or more of the following: an auxiliary power unit (APU), a fuel tank/system, component(s) of an electrical system, component(s) of a hydraulic system, component(s) of an environment control system (ECS) and component(s) of a fire detection and extinguishing system (FIDEX). In some business jets, it can be preferable to have some or most system components 26 located in the tail portion of aircraft 10 in order to keep the passenger cabin clear of system conduits and components 26 as much as possible. Some components 26 can also be located in pressurized zone 22 of aircraft 10 and may be connected to components 26 in unpressurized zone 24 via system penetrations 28 (feedthroughs) extending through pressure bulkhead 12.

Pressure bulkhead 12 can be configured to provide a pressure (i.e., hermetic) seal with fuselage 16 in order to help maintain pressure inside pressurized zone 22 during operation (e.g., flight) of aircraft 10. Accordingly, pressure bulkhead 12 and system penetrations 28 can be configured to withstand the pressurization loads applied thereto by the pressure difference between pressurized zone 22 and unpressurized zone 24.

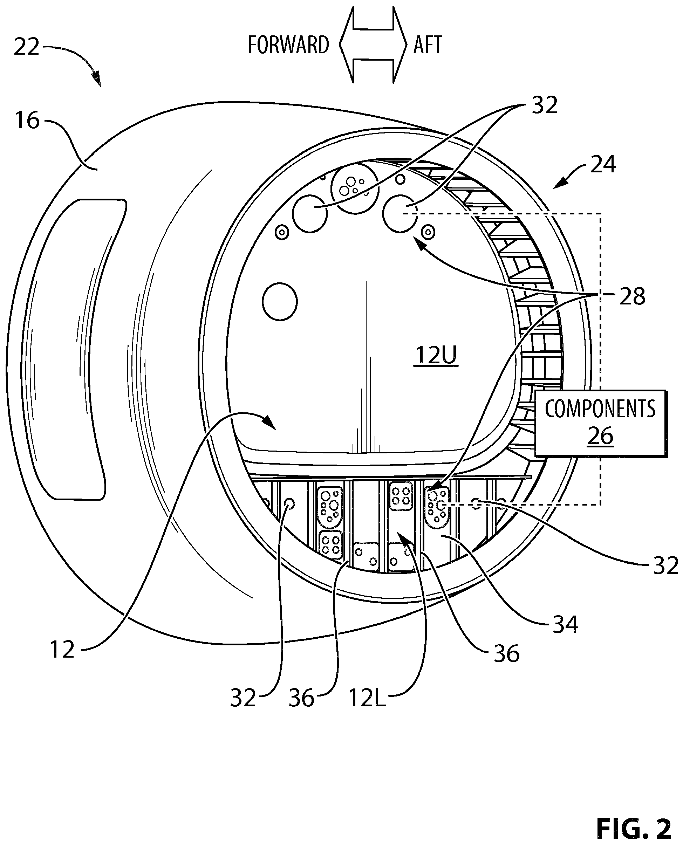

FIG. 2 is a perspective view of an example pressure bulkhead 12 installed inside fuselage 16 of aircraft 10. Pressure bulkhead 12 can be a rear pressure bulkhead disposed aft of a passenger cabin of aircraft 10. Pressure bulkhead 12 can comprise upper bulkhead portion 12U and lower bulkhead portion 12L. Upper and lower bulkhead portions 12U, 12L can be separate components (e.g., panels) that can be made from different materials and installed separately at different times inside aircraft 10.

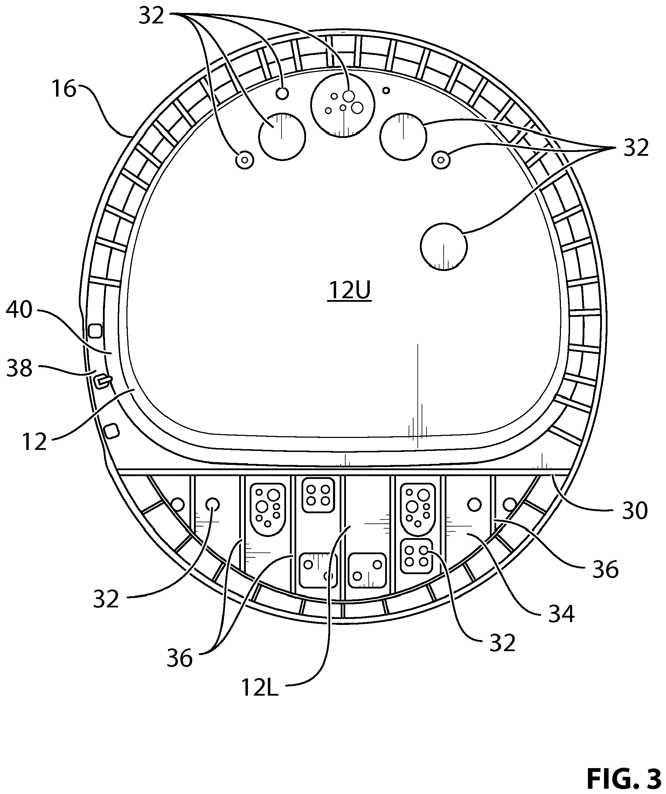

FIG. 3 is an elevation view of pressure bulkhead 12 viewed along a longitudinal axis L (see FIG. 1) of fuselage 16 of aircraft 10 from a position aft of pressure bulkhead 12.

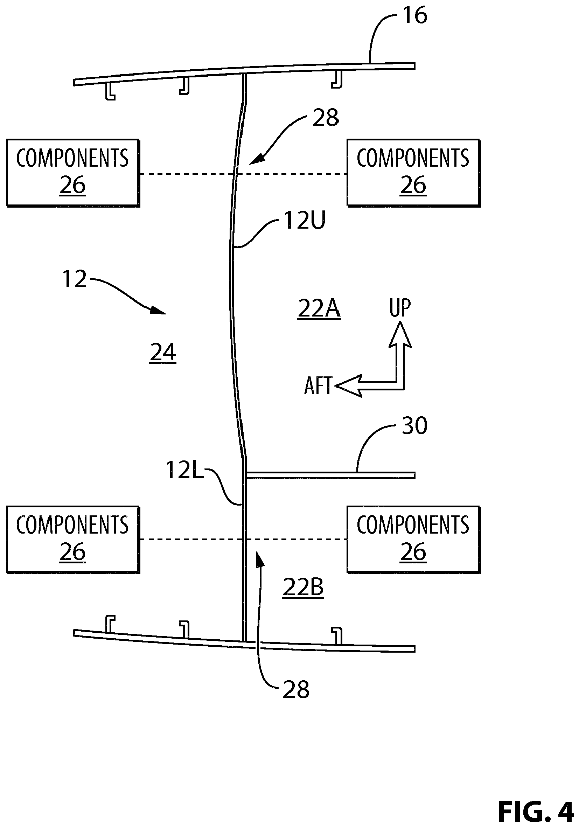

FIG. 4 is a schematic side profile of pressure bulkhead 12 in a vertical plane extending along longitudinal axis L of fuselage 16.

In reference to FIGS. 2-4, upper bulkhead portion 12U can be configured to sealingly separate first pressurized compartment 22A disposed above floor 30 of aircraft 10 from unpressurized zone 24 of aircraft 10. Lower bulkhead portion 12L can be configured to sealingly separate second pressurized compartment 22B disposed below floor 30 of aircraft 10 from unpressurized zone 24 of aircraft 10. In some configurations of aircraft 10, first pressurized compartment 22A can be a passenger cabin and second pressurized compartment 22B can be a cargo/luggage compartment or a pressurized equipment (e.g., avionics) bay in which components of one or more aircraft systems are located.

In some embodiments, at least a majority of upper bulkhead portion 12U can be made from a fibre-reinforced composite material. For example, upper bulkhead portion 12U can be made primarily (e.g., principally, mostly) or completely of a fibre-reinforced composite material. For example, in various embodiments, upper bulkhead portion 12U can have a volume fraction of fibre-reinforced composite material that is greater than 50% (e.g., between 50% and 100%), equal or greater than 60%, equal or greater than 70%, equal or greater than 80%, or, equal or greater than 90%.

Such fibre-reinforced composite material can be a carbon-fiber reinforced material (e.g., polymer) for example. Upper bulkhead portion 12U can be a generally non-planar (e.g., curved, dome shaped) panel with one or more holes 32 formed therethrough to establish one or more system penetrations 28 through upper bulkhead portion 12U. Upper bulkhead portion 12U can be a monolithic structure or, in other words, a single, cohesive, integral component. In some embodiments, upper bulkhead portion 12U can be formed using an automated fibre placement (AFP) process also known as "advanced fiber placement" for example. In some embodiments, upper bulkhead portion 12U can be formed using a "vacuum assisted resin transfer molding" (VaRTM) method, or using pre-impregnated (i.e., "prepreg") elements that are cured in an autoclave. In other embodiments, at least a majority of upper bulkhead portion 12U can be made from a suitable metallic material.

Upper bulkhead portion 12U can be installed in aircraft 10 so that a convex side upper bulkhead portion 12U is facing unpressurized zone 24 of aircraft 10. Such installation and the dome-shaped configuration of upper bulkhead portion 12U can provide an efficient structure able to absorb the pressure load between pressurized compartment 22A and unpressurized zone 24 which is at ambient pressure. In various embodiments, upper bulkhead portion 12U can have a substantially constant or varying wall thickness. In some embodiments, upper bulkhead portion 12U can have integral stiffeners.

In some embodiments, at least a majority of lower bulkhead portion 12L can be made from a metallic material such as a suitable aluminum-based alloy or a titanium-based alloy for example. Lower bulkhead portion 12L can be made primarily (e.g., principally, mostly) or completely of the metallic material. For example, in various embodiments, lower bulkhead portion 12L can have a volume fraction of metallic material that is greater than 50% (e.g., between 50% and 100%), equal or greater than 60%, equal or greater than 70%, equal or greater than 80%, or, equal or greater than 90%.

In some embodiments, lower bulkhead portion 12L, or at least a majority thereof, can be generally planar. Lower bulkhead portion 12L can comprise a substantially flat plate 34 combined with one or more reinforcing stiffeners 36. Flat plate 34 and stiffeners 36 can be manufactured as separate components that are subsequently assembled (e.g., fastened) together to form lower bulkhead portion 12L. Alternatively, flat plate 34 and stiffeners 36 can be manufactured as a single monolithic structure or, in other words, as a single, cohesive, integral component. For example, lower bulkhead portion 12L can be machined from a metal block. Lower bulkhead portion 12L can have one or more holes 32 formed therethrough to establish one or more system penetrations 28 through lower bulkhead portion 12L. The generally planar configuration of lower bulkhead portion 12L can facilitate the installation of system penetrations 28 therethrough. The metallic material of lower bulkhead portion 12L can facilitate the creation of additional penetrations 28 that may be required during the installation of components 26. For structural integrity reasons, it can sometimes be easier to add penetrations 28 into a metallic material than it is to add unanticipated penetrations 28 into a fibre-reinforced composite material. In some embodiments, lower bulkhead portion 12L can contain a larger number of system penetrations 28 than upper bulkhead portion 12U. In other embodiments, at least a majority of lower bulkhead portion 12L can be made from a suitable fibre-reinforced composite material.

As shown in FIGS. 2-4, upper bulkhead portion 12U can be larger than lower bulkhead portion 12L. For example, upper bulkhead portion 12U can span a larger area across the inside of fuselage 16 than lower bulkhead portion 12L. In various embodiments, upper bulkhead portion 12U can span an area that is between 50% and 300% larger than that of lower bulkhead portion 12L. For example, in various embodiments, upper bulkhead portion 12U can span an area that is about 50% larger, about 100% larger, about 150% larger, about 200% larger, about 250% larger or about 300% larger than that of lower bulkhead portion 12L. In some embodiments, upper bulkhead portion 12U can span an area that is between 100% and 200% larger than that of lower bulkhead portion 12L. In some embodiments, upper bulkhead portion 12U can span an area that is between 200% and 300% larger than that of lower bulkhead portion 12L. In some embodiments, upper bulkhead portion 12U can span an area that is at least 100% larger than that of lower bulkhead portion 12L. In some embodiments, upper bulkhead portion 12U can span an area that is at least 200% larger than that of lower bulkhead portion 12L.

Due to the efficient structural configuration of upper bulkhead portion 12U and the use of a fibre-reinforced composite material, upper bulkhead portion 12U can be lighter than lower bulkhead portion 12L in some embodiments. In some embodiments, a weight of upper bulkhead portion 12U can be between 20% and 40% of a combined weight of upper bulkhead portion 12U and lower bulkhead portion 12L. In some embodiments, the weight of upper bulkhead portion 12U can be between 25% and 35% of the combined weight of upper bulkhead portion 12U and lower bulkhead portion 12L. In various embodiments, the weight of upper bulkhead portion 12U can be about 20%, about 25%, about 30%, about 35% or about 40% of the combined weight of upper bulkhead portion 12U and lower bulkhead portion 12L.

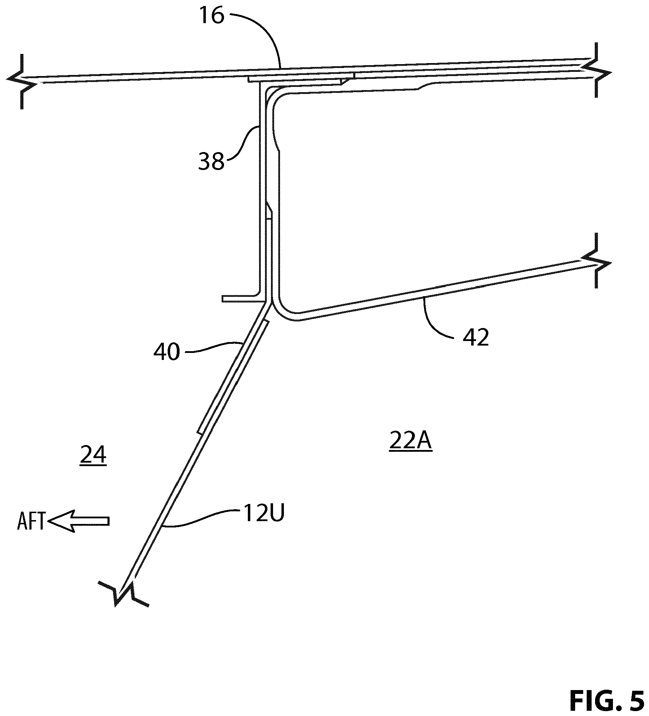

FIG. 5 is a schematic side profile view of an example structural connection between upper bulkhead portion 12U and fuselage 16 of aircraft 10. Upper bulkhead portion 12U can be supported and secured to fuselage 16 via frame 38 and one or more angle members 40. Frame 38 can be secured (e.g., fastened) to fuselage 16 and can extend around upper bulkhead portion 12U. Frame 38 can be made from a suitable metallic material such as an aluminum-based alloy or a titanium-based alloy. Angle member(s) 40 can establish an intermediate structural connection between upper bulkhead portion 12U and frame 38. Angle member(s) 40 can be secured (e.g., fastened) to frame 38 and to upper bulkhead portion 12U and can extend around upper bulkhead portion 12U. In some embodiments, angle member(s) 40 can be made from a suitable metallic material such as an aluminum-based alloy or a titanium-based alloy. In some embodiments, angle member(s) 40 can be made from a suitable fibre-reinforced composite material. In some embodiments, angle member(s) 40 can be integral to (i.e., have a unitary construction with) frame 38. In some embodiments, frame 38 and/or angle member(s) 40 can also be secured (e.g., fastened) to one or more intercostals 42 or other structural member(s) of fuselage 16. The structural connection illustrated in FIG. 5 can be configured to also be sufficiently sealed according to known or other methods in order to withstand pressurization loads.

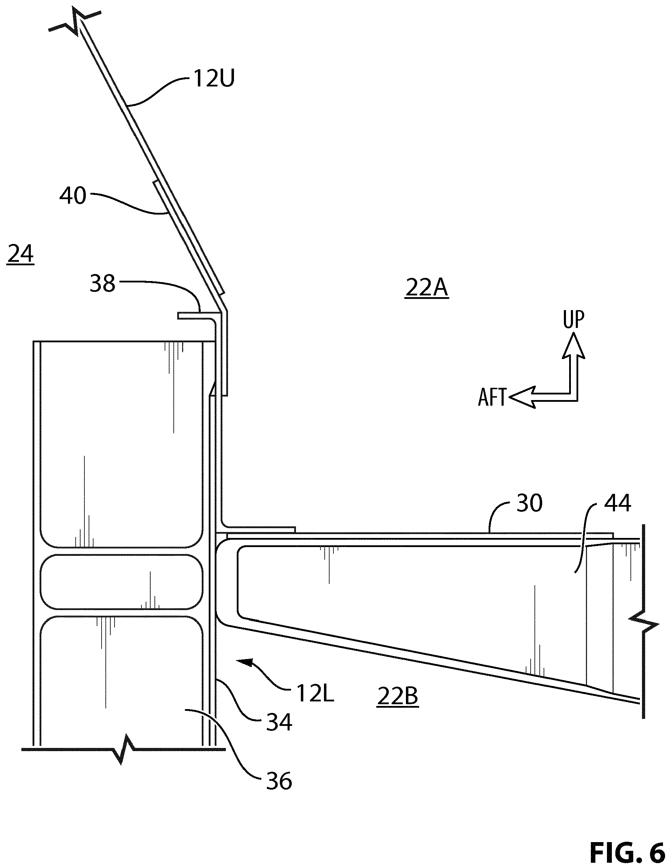

FIG. 6 is a schematic side profile view of an example structural connection between upper bulkhead portion 12U and lower bulkhead portion 12L. Upper bulkhead portion 12U can be supported and secured to floor 30 via frame 38 and one or more angle members 40. Frame 38 can be secured (e.g., fastened) to floor 30 and can extend around upper bulkhead portion 12U. Angle member(s) 40 can establish a structural connection between upper bulkhead portion 12U and frame 38. Angle member(s) 40 can be secured (e.g., fastened) to frame 38 and to upper bulkhead portion 12U and can extend around upper bulkhead portion 12U. Lower bulkhead portion 12L can be secured (e.g., fastened) to frame 38. In some embodiments, frame 38 and/or lower bulkhead portion 12L can also be secured (e.g., fastened) to one or more floor beams 44 or other structural member(s) of aircraft 10. For example, a lower part of lower bulkhead portion 12L can be secured (e.g., fastened) to suitable structural member(s) of aircraft 10 according to known or other methods. The structural connection illustrated in FIG. 6 can be configured to also be sufficiently sealed according to known or other methods in order to withstand pressurization loads.

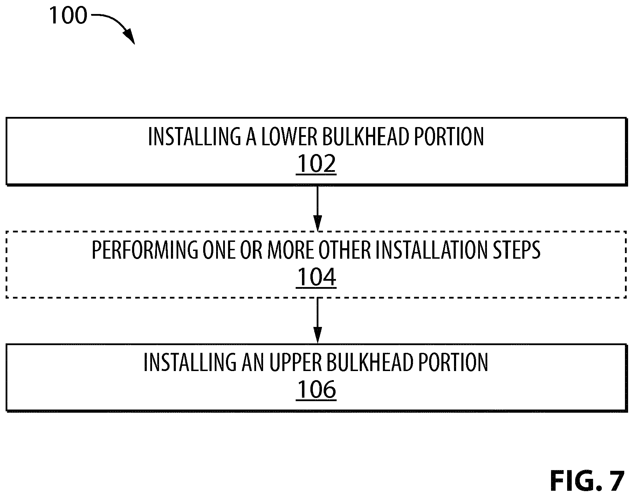

FIG. 7 is a flowchart of a method 100 for installing pressure bulkhead 12 in aircraft 10. In reference to FIG. 2, the installation of pressure bulkhead 12 can be made after the portion of fuselage 16 shown in FIG. 2 has been assembled with a tail (aft fuselage) portion of fuselage 16 that is disposed aft of the portion of fuselage 16 shown in FIG. 2. Method 100 can comprise installing lower bulkhead portion 12L and upper bulkhead portion 12U as separate components and at different times. The installation of pressure bulkhead 12 can be carried out before the fuselage portion shown in FIG. 2 is installed to one or more other forward fuselage portions so that a relatively large opening is available at the forward end of the fuselage portion in FIG. 2 for inserting lower bulkhead portion 12L and upper bulkhead portion 12U inside fuselage 16. Method 100 can comprise installing lower bulkhead portion 12L (see block 102 in FIG. 7) and then installing upper bulkhead portion 12U (see block 106 in FIG. 7). As explained below, other installation steps can the performed between the installation of lower bulkhead portion 12L and upper bulkhead portion 12U (see block 104 in FIG. 7).

In some smaller aircraft, the aft fuselage portion that is disposed aft of pressure bulkhead 12 can be relatively small and can also house components 26 of various aircraft systems. In some situations, the aft fuselage portion can only accommodate one person during the assembly of such systems and can therefore contribute to longer assembly times. Method 100 allows for lower bulkhead portion 12L to be installed inside fuselage 16 first and one or more other assembly steps to be performed before the installation of upper bulkhead portion 12U. The absence of upper bulkhead portion 12U during the other installation steps can provide access for one or more additional people to participate in the other installation steps and thereby promote a shorter assembly time.

It is understood that the installation steps of method 100 may be partial or complete installation steps. For example, for the purpose of method 100, the installation of lower bulkhead portion 12L and of upper bulkhead portion 12U can comprise placing such components at or close to their respective final assembled positions inside fuselage 16 without necessarily completing all of the assembly steps associated with lower bulkhead portion 12L and/or of upper bulkhead portion 12U.

The other installation steps referenced in block 104 can include installing one or more components 26 in unpressurized zone (e.g., aft fuselage portion) of aircraft 10 after installing lower bulkhead portion 12L and before installing upper bulkhead portion 12U. The other installation steps can include installing one or more components 26 in pressurized compartment 22B under floor 30 of aircraft 10 after installing lower bulkhead portion 12L and before installing upper bulkhead portion 12U. The other installation steps can include establishing (e.g., electric, fluid, fuel, hydraulic, pneumatic) connections between components 26 in unpressurized zone 24 and components 26 in pressurized compartment 22B and hence through lower bulkhead portion 12L. Accordingly, the other installation steps can include establishing one or more (e.g., sealed) system penetrations 28 through lower bulkhead portion 12L after installing lower bulkhead portion 12L and before installing upper bulkhead portion 12U.

Once the desired system installation steps have been performed and the desired system penetrations 28 through lower bulkhead portion 12L have been established, upper bulkhead portion 12U can then be installed in fuselage 16 via the relatively large opening at the forward end of the fuselage portion shown in FIG. 2. In some embodiments, holes 32 for establishing system penetrations 28 through upper bulkhead portion 12U can be formed into upper bulkhead portion 12U before the installation of upper bulkhead portion 12U inside fuselage 16. For example, such holes 32 can be formed outside of fuselage 16 during a composite manufacturing process or can be formed after upper bulkhead portion 12U has been consolidated, by drilling for example. Following the installation of upper bulkhead portion 12U in fuselage 16, one or more (e.g., electric, fluid, hydraulic, fuel, pneumatic) system penetrations 28 can then be established through upper bulkhead portion 12U.

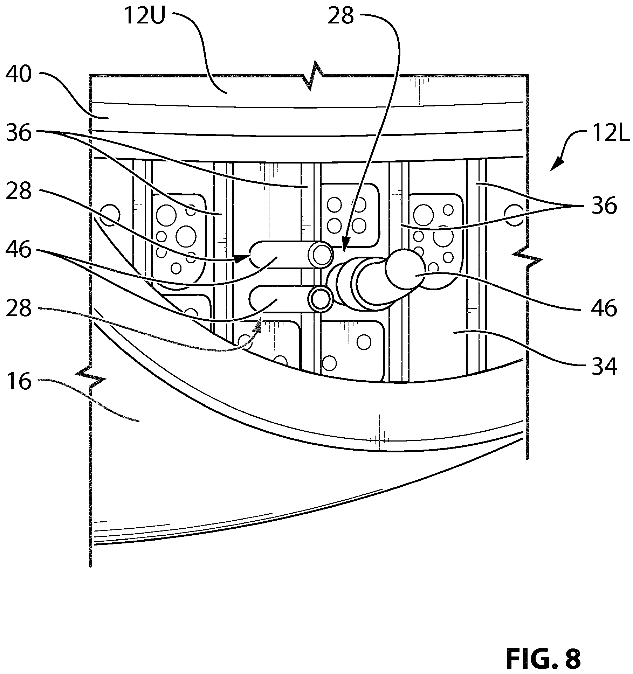

FIG. 8 is an enlarged perspective view of part of lower bulkhead portion 12L with example system penetrations 28 therethrough. As explained above, system penetrations 28 can provide electrical and/or fluid (e.g., air, fuel, water, hydraulic fluid) communication between components 26 disposed on opposite sides of pressure bulkhead 12. In various embodiments, system penetrations 28 can include conduits 46 extending through either lower bulkhead portion 12L or upper bulkhead portion 12U. System penetrations 28 can provide a pressure-sealed interface between conduits 46 and either lower bulkhead portion 12L and upper bulkhead portion 12U.

Aspects and embodiments of the disclosure will be further understood with reference to the following, non-limiting numbered clauses:
1. A pressure bulkhead of an aircraft, the pressure bulkhead comprising:
   an upper bulkhead portion sealingly separating a first pressurized compartment disposed above a floor of the aircraft from an unpressurized zone of the aircraft, the upper bulkhead portion being made primarily of a fibre-reinforced composite material; and
   a lower bulkhead portion sealingly separating a second pressurized compartment disposed below the floor of the aircraft from the unpressurized zone of the aircraft, the lower bulkhead portion being made primarily of a metallic material.
2. The pressure bulkhead as defined in clause 1, wherein the upper bulkhead portion is generally non-planar.
3. The pressure bulkhead as defined in clause 1, wherein the upper bulkhead portion is dome-shaped.
4. The pressure bulkhead as defined in any one of clauses 1 to 3, wherein the lower bulkhead portion is generally planar.
5. The pressure bulkhead as defined in any one of clauses 1 to 4, wherein the upper bulkhead portion spans a larger area than the lower bulkhead portion.
6. The pressure bulkhead as defined in any one of clauses 1 to 5, wherein a weight of the upper bulkhead portion is between 20% and 40% of a combined weight of the upper bulkhead portion and the lower bulkhead portion.
7. The pressure bulkhead as defined in any one of clauses 1 to 5, wherein a weight of the upper bulkhead portion is between 25% and 35% of a combined weight of the upper bulkhead portion and the lower bulkhead portion.
8. The pressure bulkhead as defined in any one of clauses 1 to 5, wherein a weight of the upper bulkhead portion is about 30% of a combined weight of the upper bulkhead portion and the lower bulkhead portion.
9. An aircraft comprising the pressure bulkhead as defined in any one of clauses 1 to 8.
10. A pressure bulkhead of an aircraft, the pressure bulkhead comprising:
   an upper bulkhead portion sealingly separating a first pressurized compartment disposed above a floor of the aircraft from an unpressurized zone of the aircraft, the upper bulkhead portion being generally non-planar; and
   a lower bulkhead portion sealingly separating a second pressurized compartment disposed below the floor of the aircraft from the unpressurised zone of the aircraft, the lower bulkhead portion being generally planar.
11. The pressure bulkhead as defined in clause 10, wherein the upper bulkhead portion is dome-shaped.
12. The pressure bulkhead as defined in clause 10 or clause 11, wherein the upper bulkhead portion spans a larger area than the lower bulkhead portion.
13. The pressure bulkhead as defined in any one of clauses 10 to 12, wherein the upper bulkhead portion comprises a fibre-reinforced composite material and the lower bulkhead portion comprises a metallic material.
14. The pressure bulkhead as defined in clause 13, wherein a weight of the fibre-reinforced composite material is between 20% and 40% of a combined weight of the upper bulkhead portion and the lower bulkhead portion.
15. The pressure bulkhead as defined in clause 13, wherein a weight of the fibre-reinforced composite material is between 25% and 35% of a combined weight of the upper bulkhead portion and the lower bulkhead portion.
16. The pressure bulkhead as defined in clause 13, wherein a weight of the fibre-reinforced composite material is about 30% of a combined weight of the upper bulkhead portion and the lower bulkhead portion.
17. An aircraft comprising the pressure bulkhead as defined in any one of clauses 10 to 16.
18. A method for installing a rear pressure bulkhead in an aircraft, the method comprising:
   installing a lower bulkhead portion in the aircraft, the lower bulkhead portion being configured to separate a pressurized compartment disposed below a floor of the aircraft from an unpressurized zone of the aircraft during operation of the aircraft; and
   after installing the lower bulkhead portion, installing an upper bulkhead portion in the aircraft, the upper bulkhead portion being configured to separate a pressurized compartment disposed above the floor of the aircraft from the unpressurized zone of the aircraft during operation of the aircraft.
19. The method as defined in clause 18, comprising installing one or more components in the unpressurized zone of the aircraft after installing the lower bulkhead portion and before installing the upper bulkhead portion.
20. The method as defined in clause 18 or clause 19, comprising establishing one or more system penetrations through the lower bulkhead portion after installing the lower bulkhead portion and before installing the upper bulkhead portion.
21. The method as defined in any one of clauses 18 to 20, comprising establishing one or more electrical connections through the lower bulkhead portion after installing the lower bulkhead portion and before installing the upper bulkhead portion.
22. The method as defined in any one of clauses 18 to 21, comprising establishing one or more fluid connections through the lower bulkhead portion after installing the lower bulkhead portion and before installing the upper bulkhead portion.
23. The method as defined in any one of clauses 18 to 22, comprising forming one or more system penetration holes through the upper bulkhead portion before installing the upper bulkhead portion.
24. The method as defined in any one of clauses 18 to 23, comprising establishing one or more system penetrations through the upper bulkhead portion after installing the upper bulkhead portion.
25. The method as defined in any one of clauses 18 to 24, comprising installing one or more components in the compartment disposed below the floor of the aircraft after installing the lower bulkhead portion and before installing the upper bulkhead portion.
26. The method as defined in any one of clauses 18 to 25, wherein:
   the lower bulkhead portion is generally planar; and
   the upper bulkhead portion is generally non-planar.
27. The method as defined in any one of clauses 18 to 26, wherein:
   the upper bulkhead portion is made primarily of a fibre-reinforced composite material; and
   the lower bulkhead portion is made primarily of a metallic material.
28. The method as defined in any one of clauses 18 to 27, wherein the upper bulkhead portion spans a larger area than the lower bulkhead portion.

The above description is meant to be by way of example only, and one skilled in the relevant arts will recognize that changes may be made to the embodiments described without departing from the scope of the invention disclosed. The present disclosure may be embodied in other specific forms without departing from the subject matter of the claims. The present disclosure is intended to cover and embrace all suitable changes in technology. Modifications which fall within the scope of the present invention will be apparent to those skilled in the art, in light of a review of this disclosure, and such modifications are intended to fall within the appended claims. Also, the scope of the claims should not be limited by the preferred embodiments set forth in the examples, but should be given the broadest interpretation consistent with the description as a whole.

## Claims

1. A pressure bulkhead (12) for an aircraft (10), the pressure bulkhead (12) comprising:
an upper bulkhead portion (12U) sealingly separating a first pressurized compartment (22A) disposed above a floor (30) of the aircraft from an unpressurized zone (24) of the aircraft, the upper bulkhead portion (12U) being made primarily of a fibre-reinforced composite material; and
a lower bulkhead portion (12L) sealingly separating a second pressurized compartment (22B) disposed below the floor (30) of the aircraft from the unpressurized zone (24) of the aircraft, the lower bulkhead portion (12L) being made primarily of a metallic material.

2. A pressure bulkhead (12) as claimed in claim 1, wherein the upper bulkhead portion (12U) is generally non-planar.

3. A pressure bulkhead (12) as claimed in claim 1 or claim 2, wherein the upper bulkhead portion (12U) is dome-shaped.

4. A pressure bulkhead (12) as claimed in any preceding claim, wherein the lower bulkhead portion (12L) is generally planar.

5. A pressure bulkhead (12) as claimed in any preceding claim, wherein the upper bulkhead portion (12U) spans a larger area than the lower bulkhead portion (12L).

6. A pressure bulkhead (12) as claimed in any preceding claim, wherein a weight of the upper bulkhead portion (12U) is between 20% and 40% of a combined weight of the upper bulkhead portion (12U) and the lower bulkhead portion (12L).

7. A pressure bulkhead (12) as claimed in any one of claims 1 to 5, wherein a weight of the upper bulkhead portion (12U) is between 25% and 35%, preferably about 30%, of a combined weight of the upper bulkhead portion (12U) and the lower bulkhead portion (12L).

8. An aircraft (10) or a fuselage for an aircraft comprising a pressure bulkhead as claimed in any preceding claim.

9. A method for installing a rear pressure bulkhead (12) in an aircraft (10), the method comprising:
installing a lower bulkhead portion (12L) in the aircraft, the lower bulkhead portion (12L) being configured to separate a pressurized compartment (22B) disposed below a floor (30) of the aircraft (10) from an unpressurized zone (24) of the aircraft during operation of the aircraft; and
after installing the lower bulkhead portion (12L), installing an upper bulkhead portion (12U) in the aircraft, the upper bulkhead portion (12U) being configured to separate a pressurized compartment (22A) disposed above the floor (30) of the aircraft (10) from the unpressurized zone (24) of the aircraft during operation of the aircraft.

10. A method as claimed in claim 9, comprising installing one or more components in the unpressurized zone (24) of the aircraft after installing the lower bulkhead portion (12L) and before installing the upper bulkhead portion (12U) .

11. A method as claimed in claim 9 or claim 10, comprising establishing one or more system penetrations through the lower bulkhead portion (12L) after installing the lower bulkhead portion (12L) and before installing the upper bulkhead portion (12U).

12. A method as claimed in any one of claims 9 to 11, comprising establishing one or more electrical connections through the lower bulkhead portion (12L) after installing the lower bulkhead portion (12L) and before installing the upper bulkhead portion (12U).

13. A method as claimed in any one of claims 9 to 12, comprising establishing one or more fluid connections through the lower bulkhead portion (12L) after installing the lower bulkhead portion (12L) and before installing the upper bulkhead portion (12U).

14. A method as claimed in any one of claims 9 to 13, comprising forming one or more system penetration holes through the upper bulkhead portion (12U) before installing the upper bulkhead portion (12U).

15. A method as claimed in any one of claims 9 to 14, comprising establishing one or more system penetrations through the upper bulkhead portion (12U) after installing the upper bulkhead portion (12U).
